# EUROPÄISCHE PATENTANMELDUNG

(11) **EP 0 872 423 A1**
(43) Veröffentlichungstag der Anmeldung: **21.10.1998**
(21) Anmeldenummer: 98103096.8
(22) Anmeldetag: 21.02.1998
(51) Int. Cl.: B65B 59/00, B65B 9/02, B65G 15/12

(54) **Anpassbare Transportvorrichtung für eine Umhüllungsvorrichtung**

(30) Priorität: 18.04.1997 DE 19716326
(71) Anmelder: BECK PACKAUTOMATEN GMBH & CO., 72636 Frickenhausen (DE)
(72) Erfinder: Gonser, Martin, 72636 Frickenhausen (DE); Beck, Hans, 72622 Nürtingen (DE)
(74) Vertreter: Hoeger, Stellrecht & Partner

(57) **Zusammenfassung**

Um bei einer Verpackungsvorrichtung (10) zum automatischen Verpacken von Waren in einer Umhüllung mit einer Transportvorrichtung (14) zum Transport der zu verpackenden Waren in einer Transportebene der Verpackungsvorrichtung entlang einer Transportrichtung mittels einer einlauf- und einer auslaufseitigen Transportbandvorrichtung (16,18), mit einer Verpackungsstation, in der die Waren mit der Umhüllung versehen werden, und mit einer Siegelvorrichtung zum Verschließen der die Ware enthaltenden Umhüllung, deren Arbeitsbreite an die Breite der verwendeten Umhüllung anpaßbar ist, die Anpassung der Breite der Transportvorrichtung an die Arbeitsbreite der Verpackungsvorrichtung einfacher und weniger zeitaufwendig zu gestalten, wird vorgeschlagen, daß die einlauf- und auslaufseitigen Transportbandvorrichtungen jeweils ein erstes Transportband und mindestens jeweils ein parallel zum ersten Transportband angeordnetes und mit diesem synchron antreibbares weiteres Transportband umfassen, wobei mindestens die weiteren Transportbänder jeweils auf einer Bandführung angeordnet sind, welche in einer vertikalen Ebene um eine ihr zugeordnete Antriebswelle verschwenkbar und horizontal, quer zur Transportrichtung verschieblich gelagert ist.

## Beschreibung

Die Erfindung betrifft eine Verpackungsvorrichtung zum automatischen Verpacken von Waren in einer Umhüllung mit einer Transportvorrichtung zum Transport der zu verpackenden Waren in einer Transportebene der Verpackungsvorrichtung entlang einer Transportrichtung mittels einer einlauf- und einer auslaufseitigen Transportbandvorrichtung, mit einer Verpackungsstation, in der die Waren mit der Umhüllung versehen werden, und mit einer Siegelvorrichtung zum Verschließen der die Ware enthaltenden Umhüllung, deren Arbeitsbreite an die Breite der verwendeten Umhüllung anpaßbar ist.

Solche Verpackungsvorrichtungen werden in vielfältiger Weise zum Verpacken von unterschiedlichen, auch unterschiedlich großen Waren in wechselnder Folge eingesetzt. Das Verpackungsmaterial, aus dem die Umhüllung für die Waren gebildet wird, wird üblicherweise von einer Vorratsrolle mit Endlosmaterial gezogen und im Bereich der Siegelvorrichtung vor oder nach dem Verschließen der Umhüllung durchtrennt, um einzeln verpackte Waren zu erhalten. Das Verpackungsmaterial kann hierbei als Halbschlauchfolie eingesetzt werden oder aber durch zwei von ober- und unterhalb der Transportebene zulaufenden Folienbahnen gebildet werden.

Bei unterschiedlich breiten zu verpackenden Waren werden in der Breite angepaßte Folienmaterialien verwendet, und auch die Siegelvorrichtung wird in ihrer Arbeitsbreite an die Breite der Umhüllung bzw. der verwendete Verpackungsfolie angepaßt.

Um einen stabilen Durchlauf der Waren durch die Verpackungsvorrichtung zu gewährleisten, müssen die Waren auf dem Transportweg durch die Vorrichtung ausgerichtet und vorzugsweise mindestens streckenweise auch geführt werden. In diesem Zusammenhang ist es notwendig, die Transportvorrichtung an die veränderte Breite ebenfalls anzupassen. Dies wurde bislang durch Demontage und den Austausch der Transportbänder bewerkstelligt, wobei stets die Bandführungen in ihrer Breite ebenfalls verstellt und angepaßt werden mußten. Vor der Inbetriebnahme der Verpackungsvorrichtung mit veränderter Arbeitsbreite mußten die neu eingewechselten Bänder gespannt und justiert werden. Insgesamt bedeutet dies einen erheblichen Aufwand, der jedoch angesichts der Einsparmöglichkeiten an Verpackungsmaterial, welches den eigentlichen Kostenfaktor bei der Verpackung von Waren darstellt, in Kauf genommen wurde.

Aufgabe der vorliegenden Erfindung ist es, eine Verpackungsvorrichtung der eingangs beschriebenen Art so weiterzubilden, daß die Anpassung der Breite der Transportvorrichtung an die Arbeitsbreite der Verpackungsvorrichtung einfacher und weniger zeitaufwendig vollzogen werden kann.

Diese Aufgabe wird erfindungsgemäß bei der eingangs beschriebenen Verpackungsvorrichtung dadurch gelöst, daß die einlauf- und auslaufseitigen Transportbandvorrichtungen jeweils ein erstes Transportband und mindestens jeweils ein parallel zum ersten Transportband angeordnetes und mit diesem synchron antreibbares weiteres Transportband umfassen, wobei mindestens die weiteren Transportbänder jeweils auf einer Bandführung angeordnet sind, welche in einer vertikalen Ebene um eine ihr zugeordnete Antriebswelle verschwenkbar und horizontal, quer zur Transportrichtung von einer Arbeitsposition in eine Warteposition und umgekehrt verschieblich gelagert ist.

Die parallel zueinander angeordneten Transportbänder der einlauf- und auslaufseitigen Transportbandvorrichtungen erlauben durch bloßes Verschwenken und Verschieben der einzelnen Transportbänder eine sehr einfache und schnelle Möglichkeit, die Breite der Transportvorrichtung an die Arbeitsbreite der Verpackungsvorrichtung anzupassen. Die minimale aktive Breite der Transportvorrichtung ergibt sich dabei aus der Breite der ersten Transportbänder der einlaufseitigen und der auslaufseitigen Transportbandvorrichtungen. Wird eine größere Breite benötigt, werden weitere Transportbänder aus einer Wartestellung heraus in eine Arbeitsstellung gebracht. Je nach der vorhandenen Anzahl weiterer Transportbänder und deren Breite ist die Arbeitsbreite der Transportbandvorrichtungen variierbar. Hierbei werden die einzelnen weiteren Transportbänder lediglich aus ihrer jeweiligen Arbeits- oder Wartestellung herausverschwenkt und quer zur Transportrichtung von der Arbeits- in die Warteposition oder umgekehrt verschoben und dort wieder in die Wartestellung bzw. die Arbeitsstellung zurückverschwenkt.

Dadurch, daß die Verschwenkbewegung um die Antriebswelle herum erfolgt, ist in der jeweiligen Arbeitsposition eine einfache Ankopplung an die Antriebswelle möglich. Dies kann durch Einrücken von Getrieberädern in ihre Arbeitsposition geschehen oder in anderer an sich bekannter Weise.

Besonders einfach wird die Konstruktion, wenn die Antriebswelle gleichzeitig die Lagerwelle für die Verschwenkbewegung bildet. Gesonderte Getriebeelemente zum Ankoppeln der Transportbandantriebe an die Antriebswelle können dabei vermieden werden. Vielmehr kann durch einfache formschlüssige oder reibschlüssige Verbindung eines Kopplungslelements der zugehörigen Bandführungen der weiteren Transportbänder mit der Antriebswelle ein synchrones Antreiben der weiteren Transportbänder mit den jeweils ersten Transportbändern erreicht werden.

Aufgrund der Platzverhältnisse in der Verpackungsvorrichtung hat es sich als vorteilhaft erwiesen, wenn die einlaufseitigen weiteren Bänder mit ihren Bandführungen um einen Drehpunkt verschwenkt werden, welcher benachbart zum eingangsseitigen Ende der Verpackungsvorrichtung und beabstandet von der Transportebene angeordnet ist. Dadurch verschwenkt das weitere Transportband jeweils gegen die Transportrichtung aus der Verpackungsvorrichtung in bestimmtem Umfang heraus und vermeidet beim Verschieben in die jeweils andere Position eine Kollision mit anderen Teilen der Verpackungsvorrichtung.

Diese Lösung kann auch bei der Verschwenklagerung der auslaufseitigen Bänder gewählt werden, wobei hier allerdings häufig weniger beengte Platzverhältnisse angetroffen werden. Hier kann dann der Einfachheit halber die Verschwenkachse benachbart zum ausgangsseitigen Ende der Verpackungsvorrichtung und benachbart zur Transportebene angeordnet werden und fällt im einfachsten Fall mit der Achse einer Umlenkrolle des weiteren Transportbandes zusammen.

Diese und weitere Vorteile der Erfindung werden im folgenden anhand der Zeichnung noch näher erläutert. Es zeigen im einzelnen:
- Fig. 1:: eine Seitenansicht einer erfindungsgemäßen Verpackungsvorrichtung;
- Fig. 2:: eine Draufsicht auf die Verpackungsvorrichtung in Fig. 1;
- Fig. 3:: eine Frontansicht des eingangsseitigen Endes der Verpackungsvorrichtung der Fig. 1 und 2 und
- Fig. 4:: eine Detailansicht einer Bandführung eines weiteren Transportbandes der Verpackungsvorrichtung aus Fig. 1 bis 3.

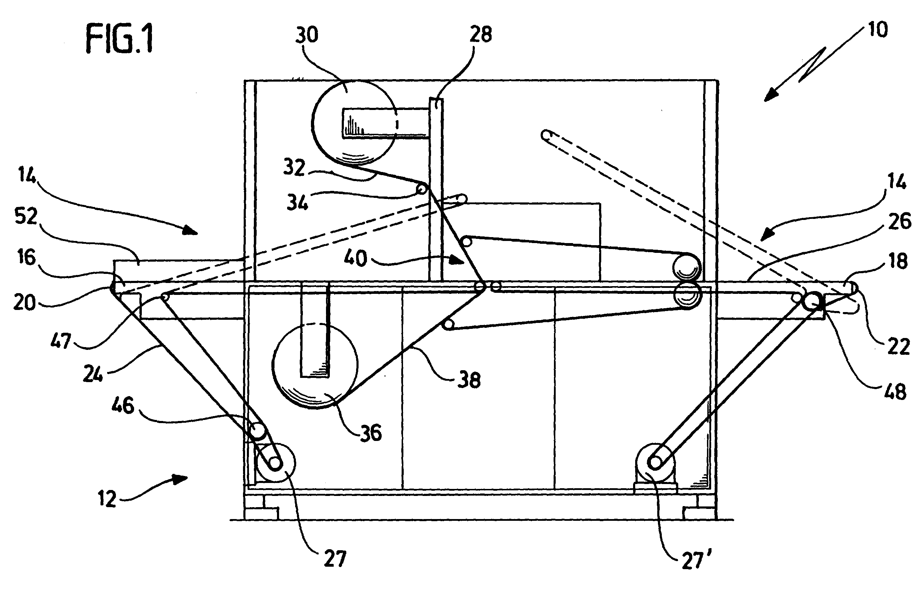

Fig. 1 zeigt eine insgesamt mit dem Bezugszeichen 10 bezeichnete erfindungsgemäße Verpackungsvorrichtung mit einem Maschinenrahmen 12 welcher in mittlerer Höhe eine Transportvorrichtung 14 hält, welche eine einlaufseitige und eine auslaufseitige Transportbandvorrichtung 16, 18 umfaßt, welche zu verpackende Waren (nicht dargestellt) vom eingangsseitigen Ende 20 der Verpackungsvorrichtung 10 zu deren ausgangsseitigem Ende 22 befördern. Sie bilden mit dem jeweiligen Obertrum ihrer Transportbänder 24, 26 die Transportebene der Verpackungsvorrichtung 10. Die Transportbandvorrichtungen 16, 18 werden von einer Motoreinheit 27, 27' angetrieben.

Oberhalb der Transportebene ist an einem Gestell 28 eine Vorratsrolle 30 einer Flachfolie 32 gehalten, welche über eine Pendelwalze 34 unter Vorspannung zur Transportebene geführt wird.

Unterhalb der Transportebene ist eine Vorratsrolle 36 einer Flachfolie 38 gehalten, welche von unten bis zur Transportebene geführt wird und dort mit der Flachfolie 32 zusammentrifft. Zwischen den beiden Flachfolien 32 und 38 werden die von der einlaufseitigen Transportbandvorrichtung 16 angelieferten zu verpackenden Waren eingeschoben und bewegen sich mit den beiden Flachfolien 32 und 38 weiter zu der auslaufseitigen Transportbandvorrichtung 18. Der Bereich, in dem sich die beiden Flachfolien 32 und 38 treffen und in dem die zu verpackende Ware zwischen die beiden Flachfolien einläuft, bildet einen Teil einer Verpackungsstation 40 der Verpackungsvorrichtung 10. Die Verpackungsstation 40 beinhaltet weiter noch eine Siegelvorrichtung, die die beiden Flachfolien seitlich sowie quer zur Transportrichtung der zu verpackenden Ware miteinander verschweißt oder in anderer Weise verbindet. Die Siegelvorrichtung, die der Übersichtlichkeit in den Figuren nicht gezeigt ist, ist in ihrer Arbeitsbreite an die Breite der jeweils verwendeten Flachfolie anpaßbar.

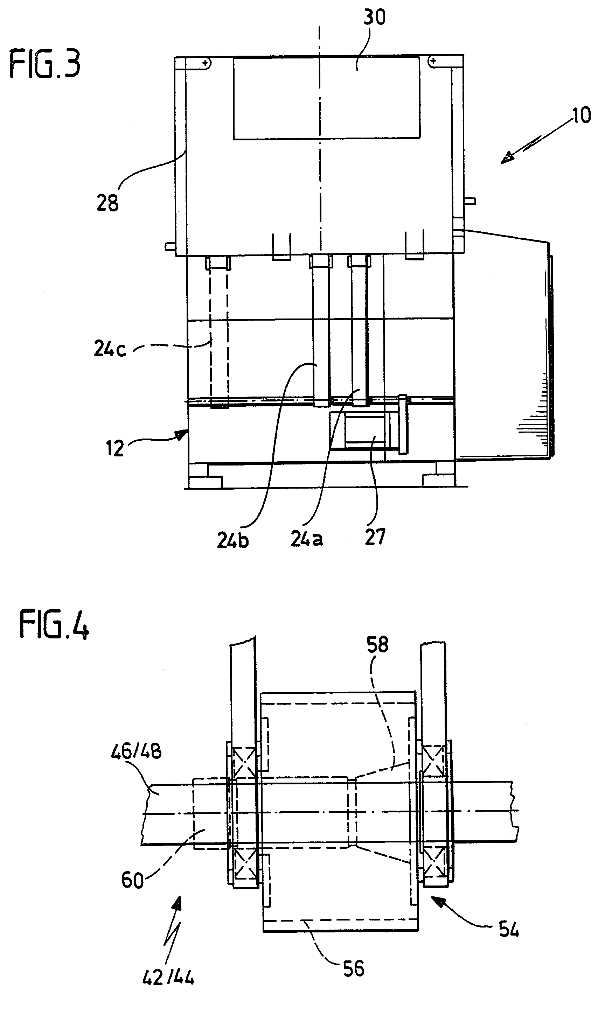

Die einlaufseitige und auslaufseitige Transportbandvorrichtungen 16 und 18 umfassen jeweils ein erstes Transportband 24a bzw. 26a, welche in der hier beschriebenen Ausführungsform Teile einer festmontierten Bandführung 42a bzw.44a sind. Daneben umfassen die einlaufseitigen und auslaufseitigen Transportbandvorrichtungen 16 und 18 ein jeweils zwei weitere Transportbänder 24b und 24c bzw. 26b und 26c. Die weiteren Transportbänder 24b, 24c, 26b und 26c sind mit ihren Bandführungen 42b, 42c, 44b und 44c schwenkbar auf einer der einlaufseitigen bzw. der auslaufseitigen Transportbandvorrichtung 16 bzw. 18 zugeordneten Antriebswelle 46 bzw. 48 gelagert. Darüber hinaus sind die Transportbänder 24b, 24c, 26b und 26c mit ihren Bandführungen 42b, 42c, 44b und 44c quer zur Transportrichtung auf der jeweiligen Antriebswelle verschieblich und können so, nachdem sie von einer Arbeits- oder Wartestellung, in der ihr jeweiliges Obertrum in der Transportebene liegt, nach oben heraus verschwenkt werden (durchbrochene Darstellung in Fig.1), wobei die Verschwenkbewegung der Transportbänder 24b und 24c durch die Pendelwalze 34 beschränkt ist. Bei einer bevorzugten Ausführungsform wird deshalb die Schwenkachse wie in den Fig.1 und 3 gezeigt in einem größeren Abstand zur Transportebene angeordnet, so daß, bedingt durch die Anordnung der Schwenkachse benachbart zum eingangsseitigen Ende 20 der Verpackungsvorrichtung 10, das benachbart zur Verpackungsstation 40 gelegene Ende der Bandführung aus der Vorrichtung 10 in gewissem Umfang heraus verschwenkt wird und die Pendelwalze 34 passieren kann. Das Untertrum des Bandes 24 wird hierbei über die Rolle 47 umgelenkt.

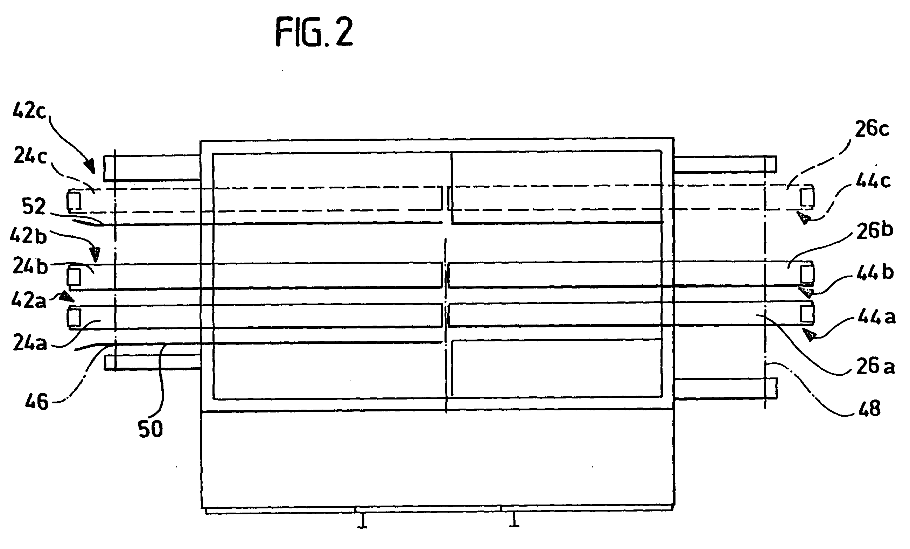

In der in Fig.2 wiedergegebenen Konfiguration befindet sich das Transportband 24c in einer Wartestellung während die Transportbänder 24a und 24b in einer Arbeitsstellung angeordnet sind. Entsprechendes gilt für die Bänder 26c bzw. 26a und 26b. Soll die Arbeitsbreite der Verpackungsvorrichtung vergrößert werden, wird das Transportband 24c mit seiner Bandführung 42c aus der Wartestellung noch oben verschwenkt und aus der Warteposition in eine Arbeitsposition verschoben und in eine Arbeitsstellung abgesenkt. Der entsprechende Vorgang erfolgt bei dem Transportband 26c. Die Transportebene wird dann durch die drei direkt nebeneinander angeordneten Transportbänder 24a, 24b und 24c bzw. 26a, 26b und 26c gebildet.

Die in die Verpackungsvorrichtung 10 einlaufenden zu verpackenden Waren werden von seitlichen Leitblechen 50 und 52 ausgerichtet und der Verpackungsstation 40 zugeführt. Dort wird die Ware von den von oben und unten zugelieferten Flachfolien umhüllt und mittels der (nicht dargestellten) Siegelvorrichtung allseitig eingeschweißt. Nachfolgend wird die verpackt Ware von der auslaufseitigen Transportbandvorrichtung 18 aus der Verpackungsvorrichtung 10 heraus transportiert und nachgeordneten Handhabungsvorrichtungen übergeben.

Fig. 4 zeigt ein Detail einer vorteilhaften Bandführung 42/44 mit einer Kopplungsvorrichtung 54, welche eine Bandrolle 56 und eine mit einem Spannfutter 58 versehene Drehlagerung 60 umfaßt. Durch Spannen bzw. Entspannen des Spannfutters wird die Bandrolle reibschlüssig mit der durchgehenden Antriebswelle 46 bzw. 48 verbunden bzw. von dieser entkoppelt und die Bandrolle treibt das über sie geführte Transportband 24b, 24c, 26b oder 26c an. Im entspannten Zustand erlaubt die Kopplungsvorrichtung 54 das Verschwenken der jeweiligen Bandführung und das Verschieben derselben auf der Antriebswelle 46/48 aus der Arbeitsposition in die Warteposition und umgekehrt.

## Patentansprüche

1. Verpackungsvorrichtung zum automatischen Verpacken von Waren in einer Umhüllung mit einer Transportvorrichtung zum Transport der zu verpackenden Waren in einer Transportebene der Verpackungsvorrichtung entlang einer Transportrichtung mittels einer einlauf- und einer auslaufseitigen Transportbandvorrichtung, mit einer Verpackungsstation, in der die Waren mit der Umhüllung versehen werden, und mit einer Siegelvorrichtung zum Verschließen der die Ware enthaltenden Umhüllung, deren Arbeitsbreite an die Breite der verwendeten Umhüllung anpaßbar ist, dadurch gekennzeichnet, daß die einlauf- und auslaufseitigen Transportbandvorrichtungen (16; 18) jeweils ein erstes Transportband (24a; 26a) und mindestens jeweils ein parallel zum ersten Transportband (24a; 26a) angeordnetes und mit diesem synchron antreibbares weiteres Transportband (24b, 24c; 26b, 26c) umfassen, wobei mindestens die weiteren Transportbänder (24b, 24c; 26b, 26c) jeweils auf einer Bandführung (42b, 42c; 44b, 44c) angeordnet sind, welche in einer vertikalen Ebene um eine ihr zugeordnete Antriebswelle (26; 48) verschwenkbar und horizontal, quer zur Transportrichtung verschieblich gelagert ist.

2. Verpackungsvorrichtung nach Anspruch 1, dadurch gekennzeichnet, daß die Bandführungen (42b, 42c; 44b, 44c) der weiteren Transporthänder (24b, 24c; 26b, 26c) jeweils auf der zugehörigen Antriebswelle (46; 48) verschwenkbar und verschieblich gelagert sind.

3. Verpackungsvorrichtung nach Anspruch 1 oder 2, dadurch gekennzeichnet, daß die Verschwenkachse für die Verschwenkbewegung der Bandführung (42b, 42c) für das weitere Transportband (24b, 24c) der einlaufseitigen Transportbandvorrichtung (16) benachbart zum eingangsseitigen Ende (20) der Verpackungsvorrichtung (10) und beahstandet von der Transportebene angeordnet ist.

4. Verpackungsvorrichtung nach einem der Ansprüche 1 bis 3, dadurch gekennzeichnet, daß die Verschwencachse für die Verschwenkbewegung der Bandführung (44b, 44c) für das weitere Transportband (26b, 26c) der auslaufseitigen Transportbandvorrichtung (18) benachbart zum ausgangsseitigen Ende (22) der Verpackungsvorrichtung (10) und benachbart zur Transportebene angeordnet ist.

5. Verpackungsvorrichtung nach einem der Ansprüche 1 bis 4, dadurch gekennzeichnet, daß die Bandführungen (42b, 42c; 44b, 44c) eine Kopplungsvorrichtung umfassen, welche formschlüssig mit der zugeordneten Antriebswelle (46; 48) lösbar verbindbar ist.

6. Verpackungsvorrichtung nach einem der Ansprüche 1 bis 4, dadurch gekennzeichnet, daß die Bandführungen (42b, 42c; 44b, 44c) eine Kopplungsvorrichtung (54) umfassen, welche reibschlüssig mit der zugeordneten Antriebswelle (46; 48) lösbar verbindbar ist.
